# EUROPEAN PATENT APPLICATION

(11) **EP 4 050 240 A1**
(43) Date of publication of application: **31.08.2022**
(21) Application number: 22158471.7
(22) Date of filing: 24.02.2022
(51) Int. Cl.: F16H 55/50, B66D 3/04

(54) **PULLEY**

(30) Priority: 26.02.2021 GB 202102816
(71) Applicant: Treemagineers Ltd, Pitiochry PH17 2QH (GB)
(72) Inventor: Cowell, Christopher Sidney, Pitlochry, PH18 5TP (GB); McMaster, Darren, Caernarfon, LL55 4EL (GB)
(74) Representative: Hamilton, Alistair

(57) **Abstract**

A pulley is disclosed, that comprises: a block formed from first and second spaced-apart plates (12', 12"); a sheave axle (20) that interconnects and is secured to the plates (12', 12"); a sheave (34) carried for rotation on the sheave axle (20) between the plates (12', 12"); and a becket assembly comprising a becket axle (62) that interconnects and is removably secured to the plates (12', 12") and a blocking component (54) carried on the becket axle (62). The becket axle (62) can be removed from the pulley to enable removal of the blocking component (54) from the pulley. This allows a rope or similar element to be introduced between or removed from between the plates (12', 12").

## Description

This invention relates to a pulley. More specifically, it relates to a pulley that might be used in a wide variety of rope rigging installations, such as are used in many applications including, but not limited to rope access, working at height, climbing, rescue and maritime.

At its most basic, a pulley comprises a block within which a sheave is mounted for rotation about a sheave axis. The block has some anchoring means by which it can be secured to an anchorage; this may include a hole through one or more part of the block through which a connecting device, such as a carabiner, rope or sling can be passed. The anchoring means is capable of safely transferring the working load of the pulley to the anchorage. A common form of block has a pair of spaced plates which extend to axial opposite sides of the sheave, in which case the anchorage may be formed as aligned holes through the plates or by a part of the block that interconnects the plates.

A pulley may additionally include a becket The becket is a formation of the block that provides a curved surface over which a rope can run or through which a connecting device can be passed. This provides an additional point at which the pulley can be connected to a rigging system. Typically, the becket is formed as an aperture that passes through one or more component of the block, or a surface that interconnects plate components of the block. This limits the versatility of the becket, since a rope can only be installed by passing an end through the becket. This completely prevents the use of the becket with a loop or eye permanently formed at an end of a rope, and restricts its use where the end of the rope cannot readily be accessed, for example, a fixed rope spanning a space.

From a first aspect, this invention provides a pulley comprising:
a block formed from first and second spaced-apart plates;
a sheave axle that interconnects and is secured to the plates;
a sheave carried for rotation on the sheave axle between the plates;
a becket assembly comprising a becket axle that interconnects and is removably secured to the plates and a blocking component carried on the becket axle; whereby
the becket axle can be removed from the pulley to enable removal of the blocking component from the pulley.

This allows a rope or similar element to be introduced between or removed from between the plates. In saying that the becket axle can be removed from the pulley, it is intended to mean it is removable and that it can be removed by a user, for example when constructing or dismantling a rigging installation using normal tools, as distinct from an arrangement that can be or is intended to be removed only during repair or servicing.

The blocking component may be a rope director that presents a guiding surface that faces towards the sheave. The guiding surface is typically curved surrounding the becket axle and is typically concave in a transverse direction between the plates. This ensures that a rope or other component moving on the guiding surface can slide smoothly and remains centred between the plates. Alternatively, the guiding surface may be flat in a transverse direction between the plates, such that the guiding surface is cylindrical or part of a cylinder.

In embodiments of the invention, the blocking component may include a functional component or a link that includes formations by which it may be connected to a functional component For example, the functional component may include one or more of a shackle, a swivel, a carabiner, camming device or a pulley. For example, the link and functional components may be as disclosed in EP-A-3323474.

The blocking component and/or the plates may include formations that prevent its rotation upon the becket axle. Alternatively, the blocking component may be carried on bearings to allow it to rotate on the becket axle.

The becket axle may pass through a respective becket hole that extends through each of the plates. At least part of the becket axle and at least part of one or both of the becket holes may be shaped to prevent rotation of the becket axle with respect to the plates (12).A part of each of the becket axle and the becket hole may be suitably shaped to prevent rotation of the becket axle with respect to the plates. For example, the becket axle may have a head of non-round cross-section that is received within a recess also of non-round shape within one of the plates. The head may include a groove within which an O-ring is located, whereby on assembly, the O-ring makes contact with material of the plates surrounding the recess. The groove may have a sectional shape that is similar to the non-round section of the head. This invention also provides a fastener or an axle that has a shank and a head, at least a portion of the head having a non-round sectional shape, the head including a groove within the section of non-round sectional shape within which groove an O-ring is retained. The groove and O-ring may have a non-round sectional shape similar to that of the portion of the head.

The becket axle is typically retained in the pulley by a removable fastener.

The sheave axle may be permanently secured to the plates - that is, it may be configured such that it is not removable by a user during normal use of the pulley.

From a second aspect, this invention provides an installation for use in supporting or as fall-protection for a person working at height that includes a pulley according to the first aspect of the invention.

In such an installation, the sheave is typically carried on a load-bearing cable or rope. A load-bearing connection is made to the blocking component - this is made possible by this invention, in contrast with known removable becket systems, which do not have sufficient strength in all loading directions and configurations for such application.

Embodiments of the invention will now be described in detail, by way of example, and with reference to the accompanying drawings, in which:

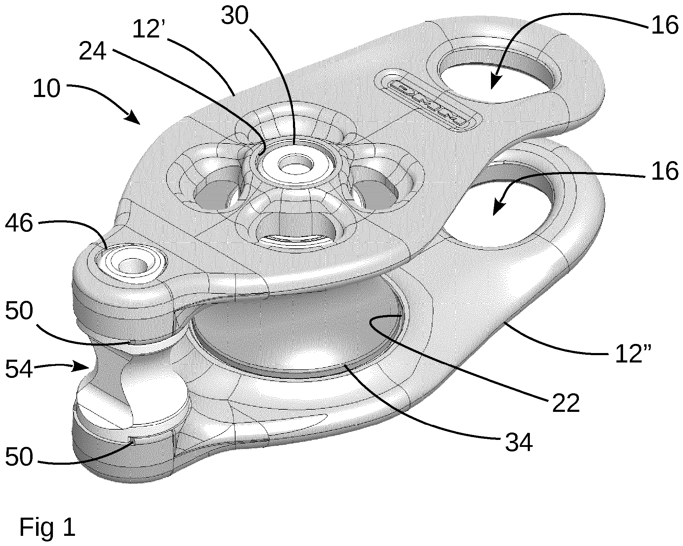

Figure 1 shows a pulley being an embodiment of the invention;

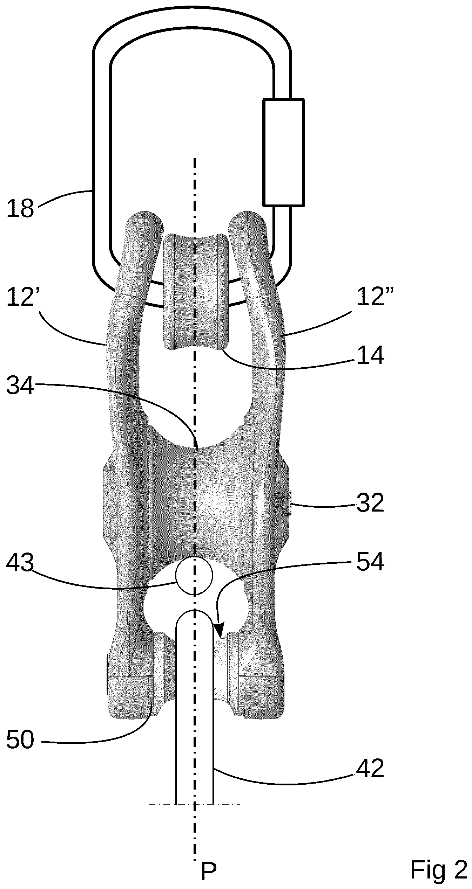

Figure 2 shows a side view of the pulley of Figure 1 with an optional spacer;

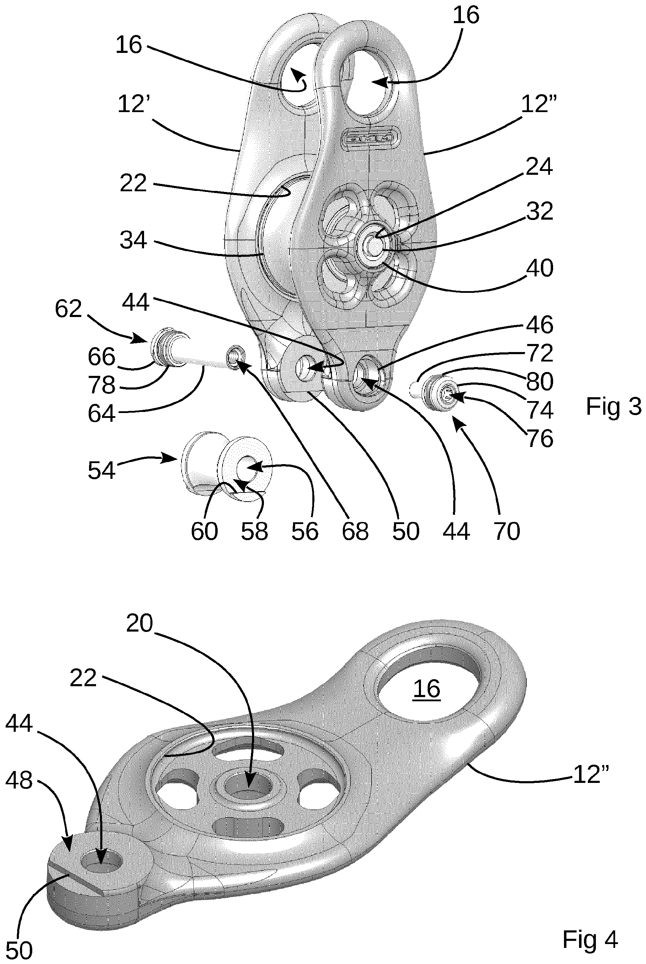

Figure 3 shows a side view of the pulley of Figure 1 with a becket assembly removed;
Figure 4 shows a plate component of the pulley of Figure 1;

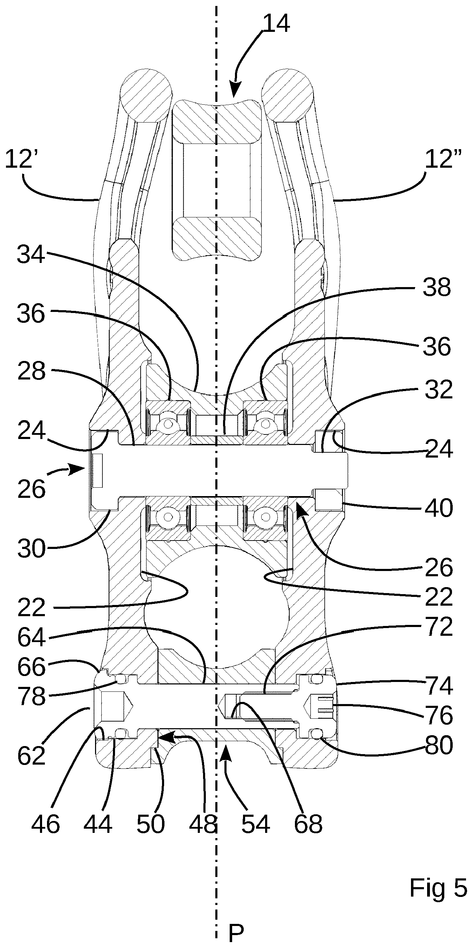

Figure 5 is a cross-section of the pulley of Figure 1;
Figure 6 is a cross-section of a second embodiment of the invention;
Figure 7 is a cross-section of a third embodiment of the invention;
Figures 8 to 11 show embodiments of the invention with a rope director of the embodiment of Figure 1 replaced with alternative boss components to form an assembled device;
Figure 12 is a cross section through the head and part of the shaft of a becket axle in the embodiments of Figures 1 to 11;
Figure 13 shows an alternative becket axle that can be used in variations to the embodiments of Figures 1 to 11;
Figure 14 is a transverse cross section through the head and O-ring of the becket axle of Figure 13; and
Figures 15 and 16 are cross-sectional views of a head of the becket axle of Figures 13 and 14 during assembly and once assembled.

With reference to the drawings, a pulley 10 embodying the invention has a block that is formed from substantially identical first and second spaced-apart plates 12', 12" (indicated as 12 generally). The block is symmetrical about a longitudinal centre plane P (although it should be noted that the axles and associated fasteners are not completely symmetrical as will be apparent).

The peripheral shape of the plates 12 is not critical to their function. In this embodiment, the plates 12 are elongate and have a periphery that broadens towards the middle and narrows towards upper and lower ends. The periphery of the plates 12 is rounded and has no sharp edges or corners. The plates 12 have inner and outer surfaces, the inner surfaces facing one another in the assembled pulley.

A circular attachment hole 16 is formed though each plate 12 close to the upper end. These are in alignment with one another in the assembled pulley 10. They serve to provide a connection point for the pulley 10 and can be connected to a connection device such as a carabiner 18. Optionally, a toroidal spacer 14 is located between the attachment holes 16 to resist compressive forces that would deflect the plates 12 towards one another - the connection device also passes through the spacer 14. The spacer 14 can provide a connection to an external component, such as a shackle.

A circular sheave axle hole 20 is formed through each plate 12 approximately centrally of the plate 12, the sheave axle hole 20 extending transversely, in a direction perpendicular to the plane P. The sheave axle hole 20 is surrounded by an annular recess 22 in the inner surface. An end portion of the sheave hole that opens to the outer surface is counterbored, at 24.

A sheave axle 26 has a cylindrical shaft portion 28, a head 30 of greater diameter at one end of the shaft portion, and a spigot portion 32 of smaller diameter projecting from the shaft portion.

A sheave assembly is carried on the sheave axle 26. The sheave assembly comprises a sheave 34 carried on two rolling-element bearings 36, the inner races of which are supported upon the shaft portion 28 of the sheave axle 26, and cylindrical spacer 38 that is carried on the shaft portion 28 between the bearings 36. The sheave 34 is carried on the outer races of the bearings 36.

The pulley is assembled by passing the shaft portion 28 of the sheave axle through the sheave axle hole 20 of one of the plates 12' from the outer surface until the head portion 30 enters the counterbore 24 in the plate 12', and abuts the material of the plate 12' within the counterbore 24. The counterbore 24 is formed with sufficient depth that the head portion 30 is completely received within it and does not project from the plate 12'. The sheave assembly is then installed on the sheave axle 26 by passing the shaft portion 28 through a first one of the bearings 36, the spacer 38, and a second one of the bearings 36. The inner race of the first bearing 36 makes contact with the plate around the periphery of the sheave axle hole 20. The sheave 34 is received within and is closely surrounded by the annular recess 22 in the inner surface of the plate 12'.

At this stage of the assembly, a short length of the shaft portion 28 projects from the second bearing 36 of the sheave assembly. The second plate 12" is added to the assembly by passing this shortprojecting length into its sheave axle hole 20 through the inner surface until the inner race of the second bearing 36 makes contact with the plate 12" around the periphery of the sheave axle hole 20 and the sheave 34 is received within and is closely surrounded by the annular recess 22 in the inner surface of the second plate 12".

Assembly is completed by application of a rivet nut 40 to the spigot portion 32 of the sheave axle 26. The rivet is tightened to place the sheave axle 26 under tension and thereby clamp the inner races of the bearings 36 and the spacer 38 transversely in compression between the two plates 12. In this embodiment, the rivet 40 nut is permanently secured to the sheave axle 26 to create an assembly that cannot be dismantled by a user during normal use of the pulley.

A circular becket hole 44 is formed through each plate 12 close to its lower end. The becket hole extends parallel to the sheave axle hole 20. At the outer surface, the becket hole 44 is counterbored at 46. The counterbore 46 has a section that is shaped as a triangle with convex sides and rounded corners (e.g., as a trochoid). At the inner surface, the becket hole 44 is surrounded by a mating surface 48. The mating surface 48 is generally annular and is in a plane that is normal to the axis of the becket hole 44, such that in the assembled pulley, the mating surfaces 48 are parallel and face one another. Each mating surface 48 has two regions separated by a step 50, such that a sector of the mating surfaces are spaced apart by a greater distance than the rest of the mating surfaces 48 to form a locating key.

A becket assembly is mounted on the pulley. In this embodiment, the becket assembly includes a rope director 54 that serves as a blocking component. The rope director 54 is shaped as a spool with an axial through bore 56 or circular section that extends between parallel, spaced, annular mating surfaces 58 each of which extends in a plane normal to the through bore 56. Each mating surface 58 has two regions separate by a step 60, such that a sector of the mating surfaces are spaced apart by a greater distance than the rest of the mating surfaces 58. The distances between the sectors of the mating surfaces 58 of the rope director are the same as the spacing between the sectors of the mating surfaces 48 of the plates. A peripheral outer surface of the rope director 54 is concave and provides a rope guiding surface.

The becket assembly further includes a becket axle 62 and a retaining screw 70.

The becket axle 62 has a cylindrical shank 64 and a head 66 of larger diameter. A tapped bore 68 extends into the shank 64 from its end opposite the head 66. The head 66 has a section that is shaped as a triangle with convex sides and rounded corners (e.g., as a trochoid). The retaining screw 70 has a threaded shank 72 and a head 74. A keyed recess 76 (formed, for example, with a spline) extends axially into the head 74. A peripheral groove is formed around a cylindrical part of the heads 66, 74 of the becket axle 62 and the retaining screw 70, and an elastomeric O-ring 78, 80 is located within each of the grooves.

To assemble the becket assembly, the rope director 54 is placed between the plates such that the mating surfaces 58 of the rope director 54 make contact with the mating surfaces 48 of the plates 12, the steps 50, 60 in the mating surfaces 48, 58 are in contact, and the through bore 56 of the rope director 54 is in alignment with the becket holes 44. The shank 64 of the becket axle 62 is then inserted through one of the becket holes 44 of the first plate 12' until its head 66 is received within the counterbore 46 surrounding the becket hole 44, the backet axle having been rotated to allow the head to enter the counterbore 46 of the becket hole 44. The shank 64 passes through the through-bore 56 of the rope director 54, such that its end is within the becket hole 44 of the second plate 12". The triangular shapes and dimensions of the head 66 and the counterbore 46 interengage such that rotation of the becket axle is prevented or strictly limited. The shank 72 of the retaining screw 70 is screwed into the tapped bore 68 of the becket axle 62 - it is tightened using a suitable tool inserted into the keyed recess 76 of the retaining screw 70, so clamping the rope director 54 between the plates 12. Interaction of the steps 50, 60 on the plates 12 prevents rotation of the rope director 54 on the becket axle 62. The sheave axle 26 and the becket axle 62 are parallel to one another, extending transversely between the plates 12 perpendicular to the plane P.

The O-rings 78, 80 make contact with the material of the plates 12 surrounding the becket holes 44. The O-ring 78 on the becket axle 62 resists removal of the becket axle 62 by sliding axially out of the becket holes 44; this acts as a safety feature to resist accidental removal of the becket axle 62 in case the retaining screw 70 fails or is omitted. It also assists in assembly of the pulley by holding the becket axle 62 in place in the body while the retaining screw 70 is being installed. This reduces the risk of the becket axle 62 falling out during assembly with the risk of loss of the becket axle 62 and the rope director 54, which is a particular risk if assembly is taking place at height. The O-ring 80 on the retaining screw 70 resists rotation of the retaining screw 70, so preventing or resisting accidental unscrewing of the retaining screw from the becket axle 62.

When the rope director 54 is assembled as described above, its concave outer surface faces the sheave 34. A rope, webbing or other component that passes between the rope director 54 and the sheave 34 is retained by the rope director 54, and can slide over the concave surface of the rope director 54.

When it is required to install or remove a component such as a rope 42 from the space between the sheave 34 and the rope director 54, a user can thread an end of that component into the space as in a conventional pulley. When in place, the rope director 54 blocks removal of the component by sliding it out from between the plates 12. This invention gives the user the option of removing the retaining screw 70 and the becket axle 62 and removing the rope director 54, whereupon the component can be passed between the plates and the becket assembly re-installed as described above. This procedure allows installation of a rope terminated in a spliced or stitched eye on the rope director 54, something that is not possible if the rope director 54 cannot be removed.

The becket axle 62 can be specified to provide a high-strength connection between the rope director 54 and the plates 12. This allows the rope director 54 to serve as a point for connection with personal protective equipment, for example being specified for loading up to 26 kN. Thus load can be transmitted from the rope director 54 through the plates 12 and the sheave axle 26 to the sheave 34 which is carried on and can travel along a load-bearing rope or cable 43.

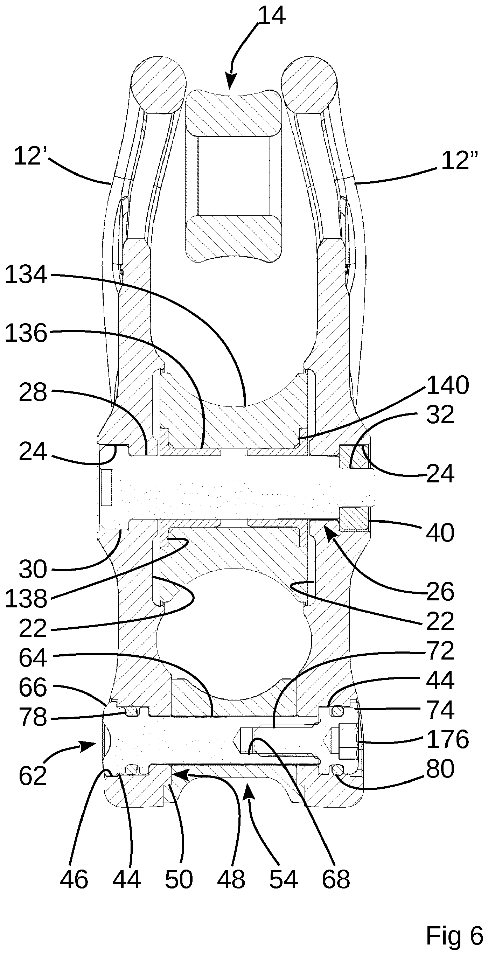

In a modification of the embodiment described above, shown in Figure 6, the sheave assembly comprises a sheave 134 carried on two plain bearings 136 formed from metal, ceramic, composite or other suitable material. The plain bearings 136 have an axial bore along its length which allows them to be a close, rotating fit on the sheave axle 26 to allow the sheave 134 to rotate on the sheave axle 26. The bearing has a radially projecting flange 138 at one end. The flange 138 is received within an annular recess 140 in the sheave 134 to serve as a thrust bearing to locate the sheave 134 axially on the sheave axle 26.

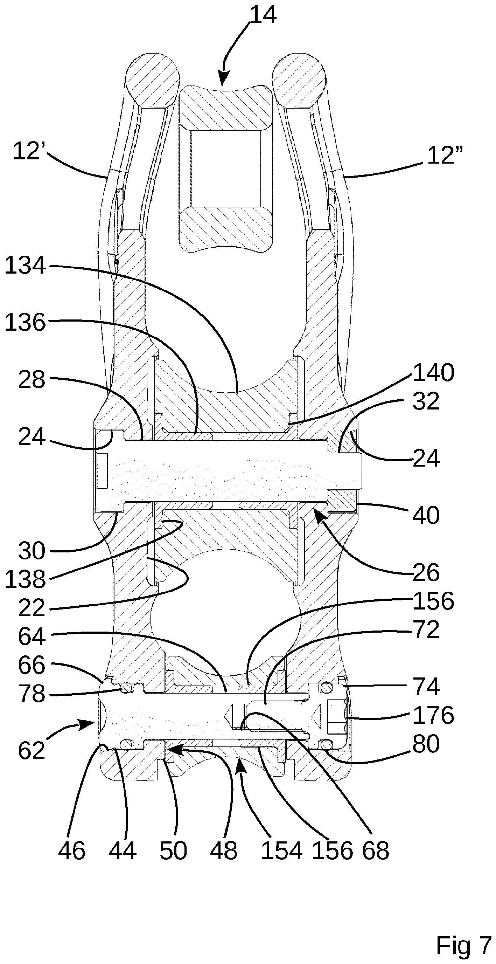

In a further modification, as shown in Figure 7, the rope director 54 is replaced with a roller 154 that is supported on the cylindrical shank 64 of the becket axle 62 on plain bearings 156. The bearings 156 enable the roller 154 to rotate upon the becket axle 62.

The becket axle 62 is shown with a keyed recess 176 of hexagonal cross-section, for engagement with a tool such as a hex key. This is a modification that can optionally be applied to any embodiment of the invention.

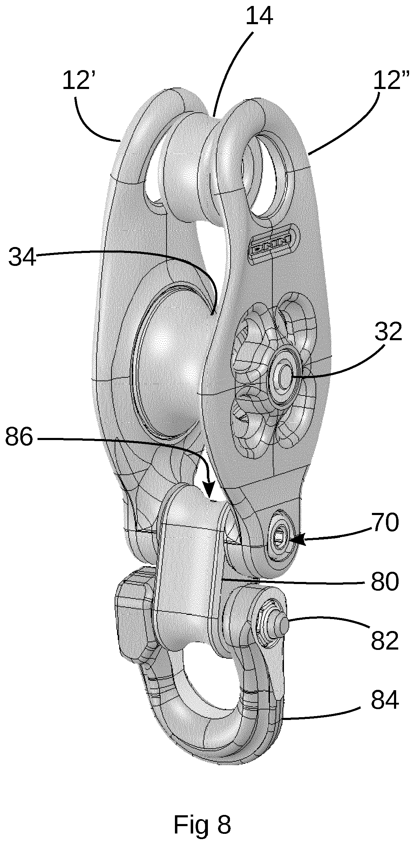

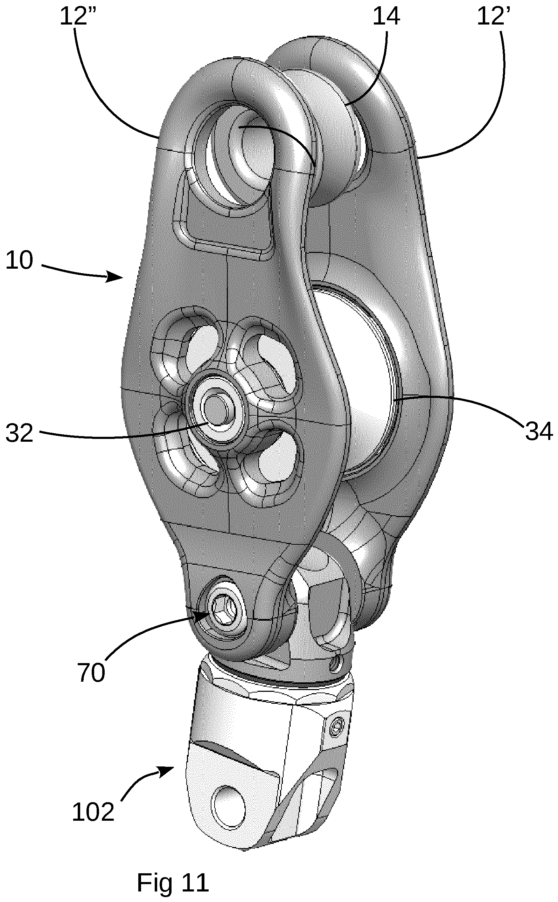

In EP-A-3 323 474 (the content of which is incorporated herein by reference) the present applicant disclosed a system for the construction of a range of devices assembled from interconnected components. An embodiment of the invention that omits the becket assembly described above can serve as a yoke component within the context of EP-A-3 323 474. The yoke is defined by the mating surfaces 48 of the plates 12. A boss component is connected to the pulley block by the becket axle 62 and retaining screw 70. Several such embodiments are shown in Figures 8 to 11.

In the embodiment of Figure 8, the boss component is a link 80 having two spaced, parallel through-holes. The becket axle 62 passes through one of the through-holes and a connecting axle 82 passes through the other of the through-holes. The connecting axle 82 can be used to connect a range of components to the link 80, the component, in this example, being a shackle 84. A region of the peripheral surface of the link at 86 that faces towards the sheave 34 is curved and centred around the becket axle and is concave in a direction parallel to the becket axle 62. This enables the link 80 to function as a rope director with similar functionality to that of the first embodiment

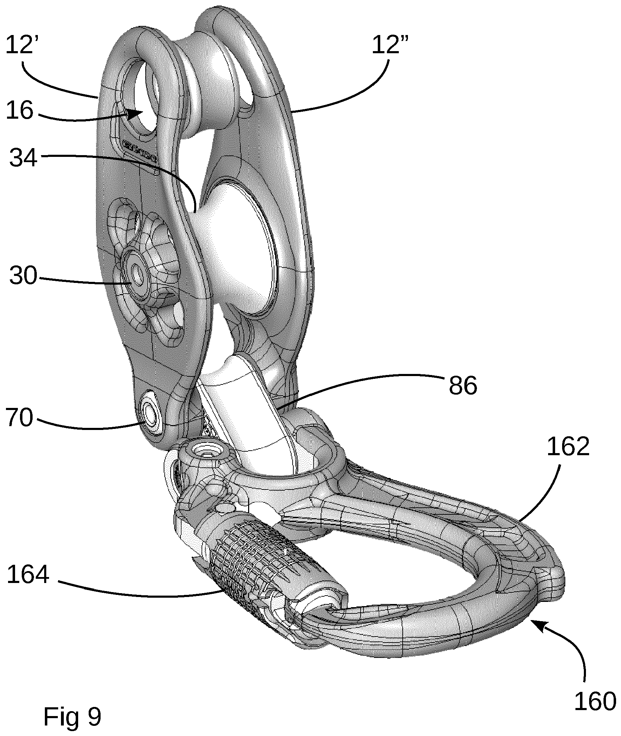

In the embodiment of Figure 9, a carabiner component 160 is connected to the link 80. The carabiner component 160 has a body 162 and an openable gate 164 that allows it to be connected to a wide range of anchorages and other components.

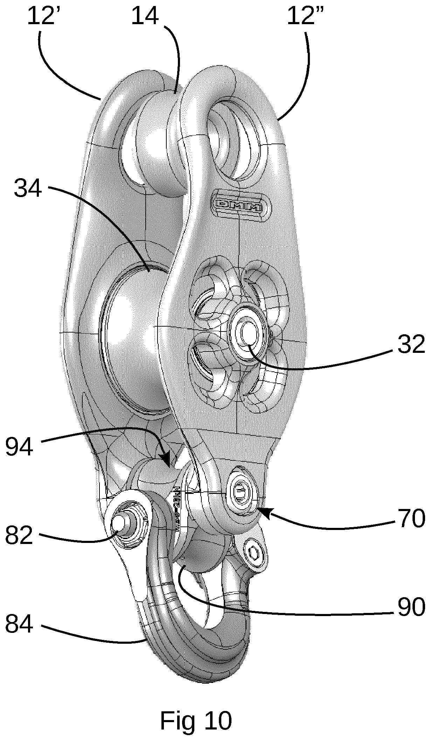

The embodiment of Figure 10 is similar, but the link 90 has through holes for the becket axle 62 and the connecting axle 82 that are at right angles to one another. The link 90 of this embodiment presents a similar concave surface at 94 towards the sheave 34.

Figure 10 shows how a swivel assembly 102 can be connected to the pulley 10. In this example, the swivel is constructed in accordance with the disclosure of EP-A-3 088 769 of the present applicant, the content of which is incorporated herein by reference.

In the embodiments described above, the sheave 34 and the rope director 54,154 have concave surfaces for engagement with a rope or cable. The concave shape urges the rope or cable to adopt a position centrally between the plates 10', 10". Alternatively, one or both of these surfaces may be flat, whereby the outer surfaces are cylindrical. This allows them to be used with a flat component such as webbing.

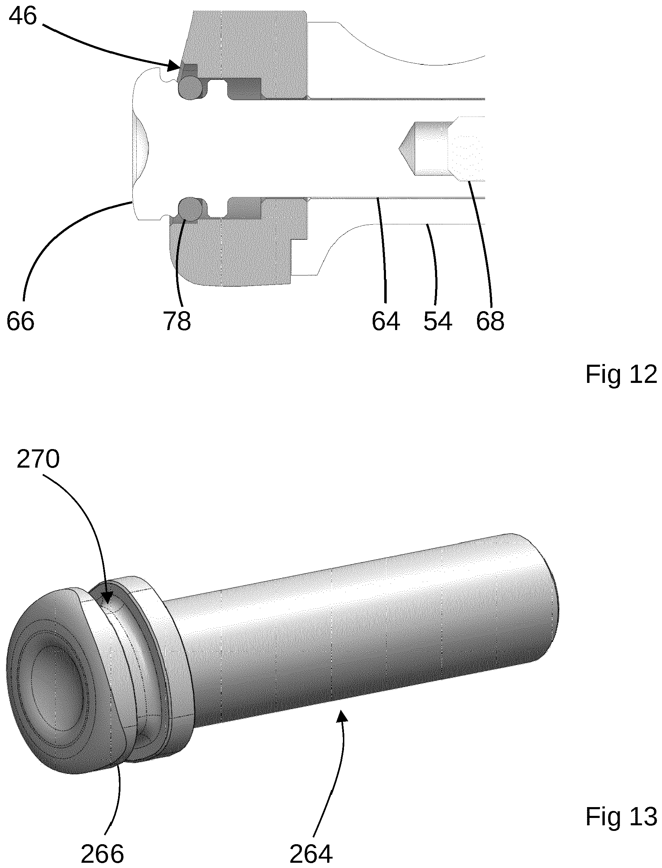

In the arrangement described above, an O-ring 78 is carried on a cylindrical part of the head 66 of the becket axle 64 to engage with a cylindrical part of the counterbore 46 of the becket hole 44. As can be seen in Figure 12, this means that the O-ring 78 makes contact with the material surrounding the becket hole 44 before the interaction between the counterbore 46 and the head 66 constrains rotation of the becket axle 64. This can complicate the assembly process.In a modification to the above arrangement, the becket axle 264 has a head 266 with a cross-section that is wholly of trochoidal (or other, non-round) cross-section, including the groove 270 in which the O-ring 278 is received. Thus, the O-ring 278 also has a trochoidal shape. The counterbore 246 likewise is of trochoidal (or other non-round) section throughout its length, apart from a small lead-in flare 248.

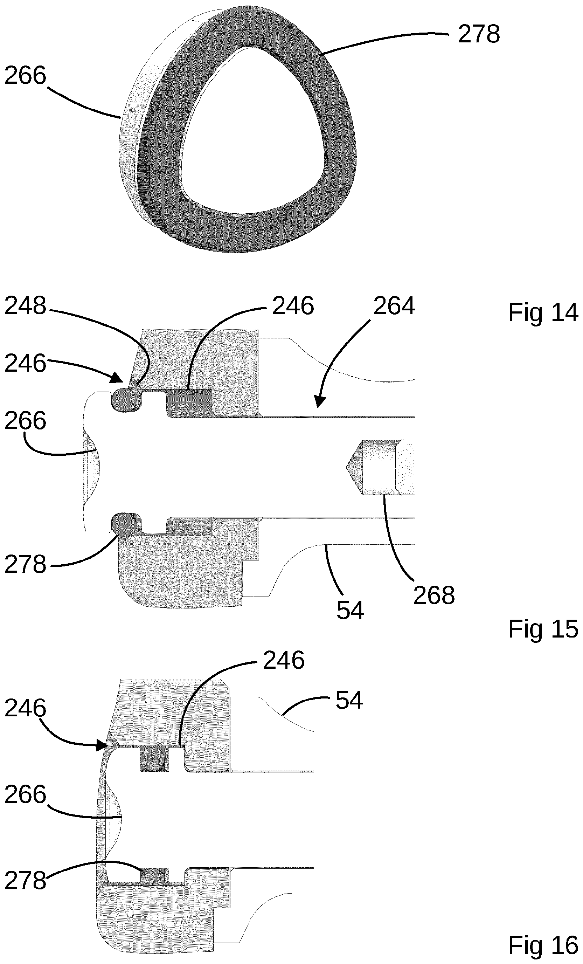

As shown in Figure 14, the head 266 can start to enter the into the counterbore 246 only after it has been turned to the correct rotational position. Therefore, by the time during assembly at which the O-ring 278 starts to enter the counterbore 246 (guided by the flare 248), further rotation is neither needed nor possible. This allows the retaining screw 70 to be tightened into the tapped bore 268 of the becket axle 264 to draw the head 266 into the counterbore 264 without any risk that the becket axle 264 will rotate under the action of the tightening torque.

## Claims

1. A pulley (10) comprising:
a block formed from first and second spaced-apart plates (12);
a sheave axle (26) that interconnects and is secured to the plates (12);
a sheave (34) carried for rotation on the sheave axle (26) between the plates (12);
a becket assembly comprising a becket axle (62) and a blocking component (54);
**characterised in that** the becket axle (62) interconnects and is removably secured to the plates (12) and the blocking component (54) is carried on the becket axle (62); whereby
the becket axle (62) can be removed from the pulley (10) to enable removal of the blocking component (54) from the pulley (10).

2. A pulley according to claim 1 in which the blocking component is a rope director (54) that presents a guiding surface that faces towards the sheave.

3. A pulley according to claim 2 in which the guiding surface is curved surrounding the becket axle (62).

4. A pulley according to claim 2 or claim 3 in which the rope guiding surface is concave in a transverse direction between the plates (12).

5. A pulley according to claim 2 or claim 3 in which the rope guiding surface is cylindrical or partially cylindrical.

6. A pulley according to any preceding claim in which the blocking component is a link (80) that includes formations by which it may be connected to a further functional component

7. A pulley according to claim 6 in which the further functional component includes one or more of a shackle, a swivel, a carabiner or a pulley.

8. A pulley according to any preceding claim in which the blocking component (54) and/or the plates (12) includes formations (50, 60) that prevent its rotation upon the becket axle.

9. A pulley according to any one of claims 1 to 7 in which the blocking component (154) is carried on bearings to permit its rotation on the becket axle.

10. A pulley according to any preceding claim in which the becket axle (64) passes through a respective becket hole (44) that extends through each of the plates (12).

11. A pulley according to claim 10 in which at least part of the becket axle (64) and at least part of one or both of the becket holes (44) are shaped to prevent rotation of the becket axle with respect to the plates (12).

12. A pulley according to any preceding claim in which the becket axle (64) is retained in the pulley (10) by a removable fastener (74).

13. An installation for use in supporting or as fall-protection for a person working at height that includes a pulley (10) according to any preceding claim.

14. An installation according to claim 13 in which the sheave (34) is carried on a load-bearing cable or rope (43).

15. An installation according to claim 13 or claim 14 in which a load-bearing connection (42) is made to the blocking component
